# EUROPEAN PATENT APPLICATION

(11) **EP 4 819 724 A1**
(43) Date of publication of application: **07.10.2026**
(21) Application number: 26165730.8
(22) Date of filing: 18.03.2026
(51) Int. Cl.: H04W 72/0446, H04W 74/00

(54) **DEVICE AND METHOD FOR WIRELESS COMMUNICATION**

(30) Priority: 04.04.2025 KR 20250044293; 06.03.2026 US 202619559240
(71) Applicant: Samsung Electronics Co., Ltd., Suwon-si, Gyeonggi-do 16677 (KR)
(72) Inventor: KOUNDOURAKIS, Michail, 22417 Hamburg (DE)
(74) Representative: Kuhnen & Wacker Patent- und Rechtsanwaltsbüro PartG mbB

(57) **Abstract**

A method and electronic device for managing wireless communication using an abstinence announcement, including: a transceiver; at least one processor; and a memory configured to store at least one instruction which, when executed by the at least one processor, causes the electronic device to: associate with a wireless local area network, WLAN, as a non-access point, AP, station, STA (101-1, 101-2, 101-3, 101-4); receive, from an AP (102-1, 102-2) included in the WLAN, a frame including an abstinence announcement indicating that the AP (102-1, 102-2) intends to refrain from initiating a transmission opportunity, TXOP, with the non-AP STA (101-1, 101-2, 101-3, 101-4) during an abstinence period; and based on receiving the abstinence announcement, modify at least one network behavior of the non-AP STA (101-1, 101-2, 101-3, 101-4) during a portion of the abstinence period.

## Description

### BACKGROUND

### 1. Field

The disclosure relates to methods and devices for signaling transmit opportunity (TXOP) unavailability in a wireless communication system, for example an Institute of Electrical and Electronics Engineers (IEEE) 802.11 wireless local area network (WLAN) system.

### 2. Description of Related Art

A wireless local area network (WLAN) may include an access point (AP) and a non-AP station (STA) which may communicate with each other. The non-AP STA may spend a significant amount of time with its radio on, either waiting for downlink (DL) data traffic, or waiting to receive from the AP a trigger frame which may solicit uplink (UL) data traffic.

When the non-AP STA has its radio on, signaling elements such as a network allocation vector (NAV) and an allocation identifier (AID) may be used to optimize power consumption at the non-AP STA within the duration of transmission opportunities (TXOP). However, a frame (e.g., an initial control frame (ICF)) which may be used to initiate the TXOP may not announce or cover the full TXOP duration. In addition, TXOP durations may decrease when low latency is desired. As a result, the non-AP STA may be able to conserve additional power if it knows that there are no upcoming DL or UL opportunities beyond the end of a current TXOP.

The AP may already possess information indicating whether DL or UL TXOPs will be initiated after a current TXOP, because it may plan its DL and UL operations beyond the current TXOP. For example, the AP may determine not to initiate TXOPs with the non-AP STA for many reasons, including a number of STAs included in the WLAN, channel congestion of the WLAN, resource limitations of the AP, QoS (Quality of Service) requirements of the non-AP STA, etc. However, it may be difficult or impossible to communicate this information to the STA.

### SUMMARY

Provided are methods and devices for managing wireless communication using an abstinence announcement which indicates that an access point (AP) intends to refrain from initiating a transmission opportunity (TXOP) with a non-AP station (STA) during an abstinence period.

In accordance with an aspect of the disclosure, an electronic device includes: a transceiver; at least one processor; and a memory configured to store at least one instruction which, when executed by the at least one processor, causes the electronic device to: associate with a wireless local area network (WLAN) as a non-access point (AP) station (STA); receive, from an AP included in the WLAN, a frame including an abstinence announcement indicating that the AP intends to refrain from initiating a transmission opportunity (TXOP) with the non-AP STA during an abstinence period; and based on receiving the abstinence announcement, modify at least one network behavior of the non-AP STA during a portion of the abstinence period.

In accordance with an aspect of the disclosure, a method of managing wireless communication is performed by at least one processor included in an electronic device, and includes: associating with a wireless local area network (WLAN) as a non-access point (AP) station (STA); receiving, from an AP included in the WLAN, a frame including an abstinence announcement indicating that the AP intends to refrain from initiating a transmission opportunity (TXOP) with the non-AP STA during an abstinence period; and based on receiving the abstinence announcement, modifying at least one network behavior of the non-AP STA during a portion of the abstinence period.

In accordance with an aspect of the disclosure, an electronic device includes: a transceiver; at least one processor; and a memory configured to store at least one instruction which, when executed by the at least one processor, causes the electronic device to: associate with a wireless local area network (WLAN) as an access point (AP); detect at least one performance limitation associated with the electronic device; based on the at least one performance limitation, select at least one non-AP STA included in the WLAN; generate an abstinence announcement indicating that the AP intends to refrain from initiating a transmission opportunity (TXOP) with the at least one non-AP STA during an abstinence period; transmit a frame including the abstinence announcement to the at least one non-AP STA; and initiate the TXOP with at least one other STA included in the WLAN during the abstinence period.

### BRIEF DESCRIPTION OF DRAWINGS

The above and other aspects, features, and advantages of certain embodiments of the disclosure will be more apparent from the following description taken in conjunction with the accompanying drawings, in which:
FIG. 1 illustrates an overall structure of an example of a wireless communication system, according to embodiments;
FIG. 2 illustrates an example of a wireless communication system, according to embodiments;
FIG. 3 shows an example of a frame format for a multi-station block acknowledgement frame including an abstinence announcement, according to embodiments;
FIG. 4 is a table showing examples of behavior of a non-access point station in response to receiving an abstinence announcement from an access point, according to embodiments;
FIG. 5 illustrates an example of managing wireless communication, according to embodiments;
FIG. 6 illustrates an example of managing wireless communication using an abstinence announcement, according to embodiments; and
FIGS. 7 and 8 are flowcharts showing examples of processes for managing wireless communication using an abstinence announcement, according to embodiments.

### DETAILED DESCRIPTION

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under other circumstances.

According to one or more embodiments, the electronic device may be one of various types of electronic devices. The electronic devices may include, for example, a network device, a router, an access point device, a terminal station in a wireless system, a portable communication device (e.g., a smartphone), a computer device, a portable multimedia device, a portable medical device, a camera, a wearable device, or a home appliance. According to an embodiment of the disclosure, the electronic devices are not limited to those described above.

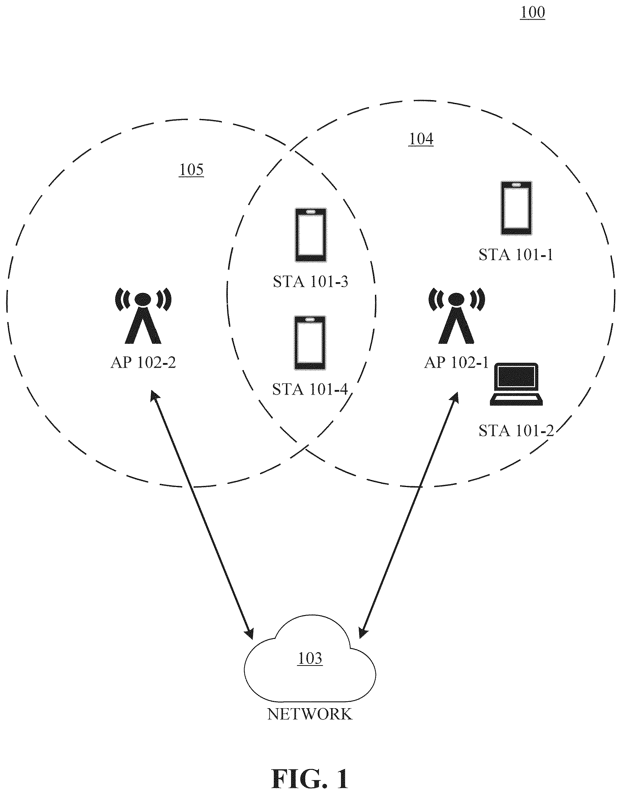

FIG. 1 illustrates an example structure of a wireless communication system, according to embodiments.

Throughout the disclosure, examples may be described which relate to the Institute of Electrical and Electronics Engineers (IEEE) 802.11 wireless LAN (WLAN) standards. However, embodiments are not limited thereto. For example, some embodiments may be applied to other communication systems (e.g., a cellular communication system such as long term evolution (LTE), LTE-advanced (LTE-A), new radio (NR), wireless broadband (WiBro), a global system for mobile communication (GSM), or a short-range communication system such as Bluetooth and near field communication (NFC)) with a similar technical background and channel form with slight modifications without departing from the scope of the disclosure, as may be determined by one of ordinary skill in the art.

As shown in FIG. 1, the wireless communication system 100 may include a first station (STA) 101-1, a second STA 101-2, a third STA 101-3, a fourth STA 101-4, a first access point (AP) 102-1, and a second AP 102-2. The first AP 102-1 and the second AP 102-2 may access a network 103 that may include the Internet, an Internet protocol (IP) network, a distribution network (DN), or any other network.

The first AP 102-1 may provide the first STA 101-1, the second STA 101-2, the third STA 101-3, and the fourth STA 101-4 with access to the network 103 within a first basic service set (BSS) 104. The second AP 102-2 may provide the third STA 101-3 and the fourth STA 101-4 with access to the network 103 within a second BSS 105. In embodiments, a BSS may be a basic building block of the IEEE 802.11 WLAN system.

In embodiments, the first AP 102-1 may communicate with at least one of the first STA 101-1, the second STA 101-2, the third STA 101-3, and the fourth STA 101-4 based on IEEE 802.11 Wi-Fi, or any other WLAN access technology.

In some embodiments, an AP (e.g., the first AP 102-1 and/or the second AP 102-2) may be referred to as a router, a gateway, and the like. In some embodiments, an STA (e.g., the first STA 101-1, the second STA 101-2, the third STA 101-3, and/or the fourth STA 101-4) may be referred to as a mobile station, a subscriber station, a terminal, a mobile terminal, a wireless terminal, user equipment, a user, and the like. The STA may be a mobile device, such as a mobile phone, a laptop computer, a wearable device, or the like, or a stationary device, such as a desktop computer, a smart TV, or the like.

An AP may allocate at least one resource unit (RU) to at least one STA. The AP may transmit data through at least one allocated RU, and at least one station may receive data through at least one allocated RU. In 802.11ax (hereafter HE), an AP may allocate only a single RU to at least one STA, while in 802.11be or next-generation IEEE 802.11 standards, an AP may allocate a multi-resource unit (MRU) including two or more RUs to at least one STA. For example, the first AP 102-1 may allocate RUs to at least one of the first STA 101-1, the second STA 101-2, the third STA 101-3, and the fourth STA 101-4, and may transmit data through the allocated RUs.

According to embodiments, if multiple wireless devices transmit on the same channel at the same time, the signals may collide and interfere with each other. When this happens, the devices must wait for another transmission opportunity (TXOP) before trying again. To avoid such interference, devices may take turns using the channel.

Using orthogonal frequency division multiple access (OFDMA), an AP may assign groups of subcarriers to different devices so communication may be performed in parallel. According to embodiments, this may be referred to as multi-user OFDMA (MU-OFDMA). According to embodiments, these groups of subcarriers may be or may include RUs. At each TXOP, an AP may determine a number of subcarriers to assign to each STA based on the bandwidth needs of the STA.

According to embodiments, UL-OFDMA may refer to a process by which an AP may coordinate simultaneous transmissions from a plurality of STAs. For example, the AP may transmit a buffer status report poll (BSRP) frame to determine how much buffered data the STAs have available to send. Based on receiving the BSRP frame, each STA may respond by transmitting a buffer status report (BSR) frame to the AP. The AP may use the received BSR frames to allocate RUs to the STAs, and then may transmit an MU request-to-send (MU-RTS) frame which includes a list of RU assignments for each STA. The STAs may transmit clear-to-send (CTS) frames in parallel using the assigned RUs, the AP may transmit a trigger frame to coordinate the transmissions, and the STAs may then transmit data frames (e.g., UL-PPDU (uplink-Physical Layer Protocol Data Unit) frames) to the AP in parallel.

Multiple input multiple output (MIMO) may refer to techniques in which multiple antennas are used to transmit and receive using multipath propagation. MIMO may allow devices to identify different paths taken by signals, and to send spatial streams of data along different paths. MU-MIMO may support a plurality of STAs across a plurality of spatial streams and UL-MU-MIMO may allow a plurality of STAs to transmit to the AP simultaneously across different spatial streams.

According to embodiments, in MU UL transmissions, based on receiving trigger-based (TB) PPDUs from one or more STAs, an AP may acknowledge all of the received data frames with a single BlockAck frame, which may be referred to as a multi-STA BlockAck frame. Using multi-STA BlockAck frames in UL transmissions may reduce the overhead associated with multiple BlockAck exchanges for each STA. For example, an AP may aggregate the BlockAck information of each STA into the multi-STA BlockAck frame, and then may transmit the multi-STA BlockAck frame to all of the STAs as a broadcast. Each STA may receive the Multi-STA BlockAck frame and extract its respective BlockAck information using its association identifier (AID).

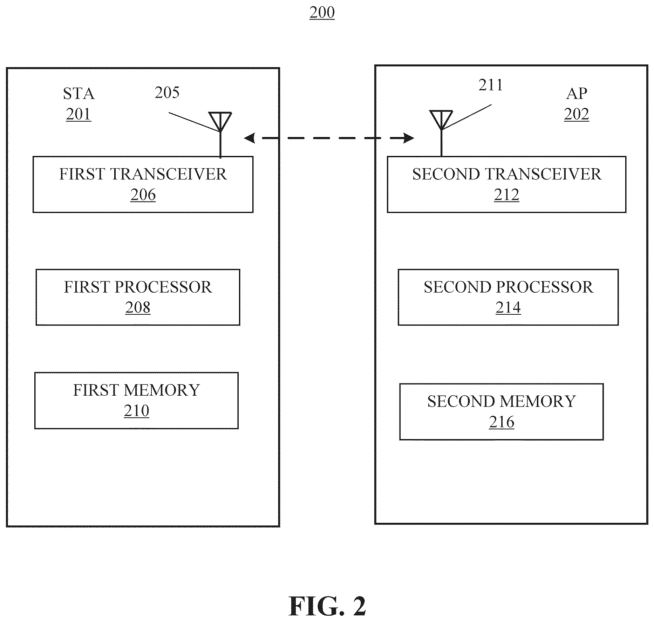

FIG. 2 illustrates a wireless communication system 200 in accordance with embodiments of the disclosure. FIG. 2 illustrates an STA 201 and an AP 202 that communicate with each other in the wireless communication system 200. In embodiments, the STA 201 may be referred to as a first electronic device and the AP 202 may be referred to as a second electronic device, but embodiments are not limited thereto. Each of the AP 202 and the STA 201 of FIG. 2 may be any apparatus communicating or configured to communicate in the wireless communication system 200 and may be referred to as an apparatus for wireless communication. In some embodiments, the STA 201 may correspond to at least one of the first STA 101-1, the second STA 101-2, the third STA 101-3, and the fourth STA 101-4. In some embodiments, each of the AP 202 and the STA 201 may be an AP (e.g., the first AP 102-1 and/or the second AP 102-2 of FIG. 1) in a WLAN system.

In FIG. 2, the STA 201 may include a first antenna 205, a first transceiver 206, a first processor 208, and a first memory 210. Similarly, the AP 202 may include a second antenna 211, a second transceiver 212, a second processor 214, and a second memory 216.

In embodiments, the first antenna 205, the first transceiver 206, the first processor 208, and the first memory 210 may be included in one package or may be included in different packages, respectively. In embodiments, the second antenna 211, the second transceiver 212, the second processor 214, and the second memory 216 may be included in one package or may be included in different packages, respectively.

In embodiments, the first antenna 205 may receive a signal from the second antenna 211 and provide the received signal to the first transceiver 206, and may transmit the signal provided from the first transceiver 206 to the second antenna 211. Similarly, the second antenna 211 may receive a signal from the first antenna 205 and provide the received signal to the second transceiver 212, and may transmit the signal provided from the second transceiver 212 to the first antenna 205.

In embodiments, the first transceiver 206 may process a signal received from the STA 201 through the first antenna 205, and may provide the processed signal to the first processor 208. In embodiments, the first transceiver 206 may process the signal provided from the first processor 208 and output the processed signal through the first antenna 205. The second transceiver 212 may similarly perform the above functions performed by the first transceiver 206.

In embodiments, the first transceiver 206 and the second transceiver 212 may include one or more circuits such as a low noise amplifier, a mixer, a filter, a power amplifier, an oscillator, and the like.

In embodiments, the first processor 208 may extract information transmitted by the AP 202 by processing the signal received from the first transceiver 206. For example, the first processor 208 may extract information by demodulating and/or decoding a signal received from the first transceiver 206.

In embodiments, the first processor 208 may generate a signal including information to be transmitted to the AP 202 and provide the signal to the first transceiver 206. In embodiments, the first processor 208 may provide a signal generated by encoding and/or modulating data to be transmitted to the AP 202 to the first transceiver 206. The second processor 214 may similarly perform the above functions performed by the first processor 208 with respect to information transmitted by the STA 201 and information to be transmitted to the STA 201.

In embodiments, the first processor 208 and the second processor 214 may include a programmable component such as a central processing unit (CPU), a digital signal processor (DSP), and the like, may include reconfigurable components, such as field programmable gate arrays (FPGAs), and may include a component that provides a fixed function, such as an intellectual property (IP) core.

In embodiments, the first processor 208 may include or access the first memory 210 that stores data and/or a series of instructions. In embodiments, the second processor 214 may include or access the second memory 216 that stores data and/or a series of instructions.

Unavailability announcements may sometimes be used by an AP in a context of in-device coexistence (IDC). For example, a device such as non-AP STA or an AP that experiences a local IDC event may use a dynamic unavailability operation (DUO) (for non-AP STA) or a periodic unavailability operation (PUO) (for AP) in a Multi-STA BlockAck frame to declare to a recipient that the device intends to be unavailable for a particular period of time, for example by providing a start time and duration of the unavailability. However, such approaches (e.g., DUO and PUO) may not be appropriate for all use cases.

For example, according to embodiments, an AP may plan to refrain or abstain from initiating a TXOP with one or more specific STAs and/or peer devices. According to embodiments, the TXOP may be, for example, a DL TXOP, in which the AP may transmit data to one or more client devices such as STAs. As an example, the TXOP may be a UL TXOP which may be triggered by a trigger frame transmitted by the AP. In some embodiments, the UL TXOP may be, for example, at least one of a MU-MIMO TXOP and an OFDMA TXOP.

For example, the AP may plan to refrain or abstain from initiating a TXOP with one or more specific STAs and/or peer devices based on detecting or determining at least one performance limitation that may limit the performance of the AP. For example, if the AP is implemented as at least one of a mobile AP (MAP) and a mobile hotspot (MHS) included in a mobile device or handset, the at least one performance limitation may include host transport limitations or limitations caused by a power state (e.g., a low-power state) of the mobile device or an operating system (OS) included in the mobile device. Such limitations may cause the AP to have limited access to a memory (e.g., a dynamic random access memory (DRAM) included in the mobile device, or to user data stored in the mobile device, for a significant amount of time, which may mean that any plans for DL TXOPs have to take into consideration this latency in order to fetch the user data from the host and/or the DRAM.

The AP may also plan to refrain or abstain from initiating a TXOP with one or more specific STAs and/or peer devices based on other considerations. For example, a transmission (TX) scheduler included in the AP may be tasked with balancing TX of DL traffic and reception (RX) of UL traffic (using, for example, UL OFDMA or MU-MIMO TXOP) to several STAs, and therefore may plan to avoid making DL transmissions, or transmitting UL OFDMA triggers, to a specific STA for traffic management reasons. In addition, backlog or latency requirements may be used to determine how long an STA will not be serviced in DL TXOPs, or when STA will be serviced in OFDMA or MU-MIMO UL TXOP next.

It may be beneficial for an STA to be aware of information indicating that an AP intends to refrain from initiating TXOPs with the STA, because such information may allow the STA to optimise DL and UL traffic (e.g. by finding another AP, enabling another link in multilink, etc.) and may allow the STA to conserve power by better managing radio on/off time. However, it may be difficult or impossible to use approaches such as DUO and PUO to provide such information from the AP to the STA in some situations.

Accordingly, embodiments may allow an AP to transmit an abstinence announcement which may signal this unavailability or abstinence for DL and OFDMA/MU-MIMO TX TXOPs with one or more STAs, so that these STAs may take advantage of this information. For example, if an STA does not have any pending UL traffic, or is willing to wait for the next OFDMA/MU-MIMO UL TX after the unavailability is completed, the STA may use the information included in the abstinence announcement to deactivate its radio in order to conserve power, or take countermeasures if it determines that the latency introduced by the abstinence or unavailability of the AP compromises its quality of service (QoS) requirements.

According to embodiments, an AP may transmit the abstinence announcement to a non-AP STA in at least one of an initial control frame (ICF), an initial control response (ICR) frame, a control response frame, and other types of frames. For example, in some embodiments, the abstinence announcement may be included in at least one of a BSRP frame and a multi-STA BlockAck frame. The abstinence announcement may signal or indicate information such as a start time of the abstinence period, a duration of the abstinence period, and a type of the abstinence period. For example, the type of the abstinence period may indicate whether the abstinence period applies to DL TXOPs, to UL MU TXOPs, or to both DL TXOPs and UL MU TXOPs. Using the abstinence announcement, the AP may commit to not initiating a frame exchange containing a frame addressed to the non-AP STA. According to embodiments, the AP may use special AID field to signal to all receiving STAs.

According to embodiments, based on receiving the abstinence announcement, the non-AP STA may use the information provided by the AP in the abstinence announcement to determine whether to deactivate its radio, without any additional explicit physical layer management signaling, for periods of time that may be longer than allowed by network allocation vectors (NAV) or other TXOP signaling.

According to embodiments, the non-AP STA may use the information provided by the AP in the abstinence announcement to reconsider and/or modify at least one of a priority and a timing of local events and/or operations. For example, some local coexistence events may be movable (e.g., Bluetooth Advanced Audio Distribution Profile (A2DP)), and may be rescheduled to occur during the abstinence period. The non-AP STA may repurpose resources (e.g., radio resources and/or buffers) for other traffic. For example, the non-AP STA may switch to a peer-to-peer (P2P) channel, or may use TX buffers for tunneled direct link setup (TDLS) traffic.

According to embodiments, based on receiving the abstinence announcement, the non-AP STA may evaluate its QoS requirements, and determine whether the abstinence period may cause its QoS to be reduced. For example, based on determining that its QoS is below a QoS threshold, the non-AP STA may trigger countermeasures intended to increase QoS. For example, the non-AP STA may use restricted target wake time (R-TWT) (e.g., may subscribe to an available R-TWT session), or may come out of power save mode, or may move to an active state more often, etc. The non-AP STA may transmit an action frame to the AP to request improved service in the future, for example by requesting the AP to increase its future availability, or offer UL opportunities in the next TXOP, etc. If multi-link operation (MLO) is used, the non-AP STA may disable a link between the non-AP STA and the AP, or may change the link mapping of DL or UL for traffic which requires lower latency, for example using traffic identifier (TID)-to-link mapping.

In some embodiments, the AP may be available for enhanced distributed channel access (EDCA) during the abstinence period. Accordingly, even after receiving the abstinence announcement, the STA may continue initiating EDCA UL TXOPs with the AP during the abstinence period.

According to embodiments, the abstinence announcement may be directed or addressed to at least one specific STA. Accordingly, the AP may be available for DL TXOPs and MU TXOPs with one or more other STAs during the abstinence period.

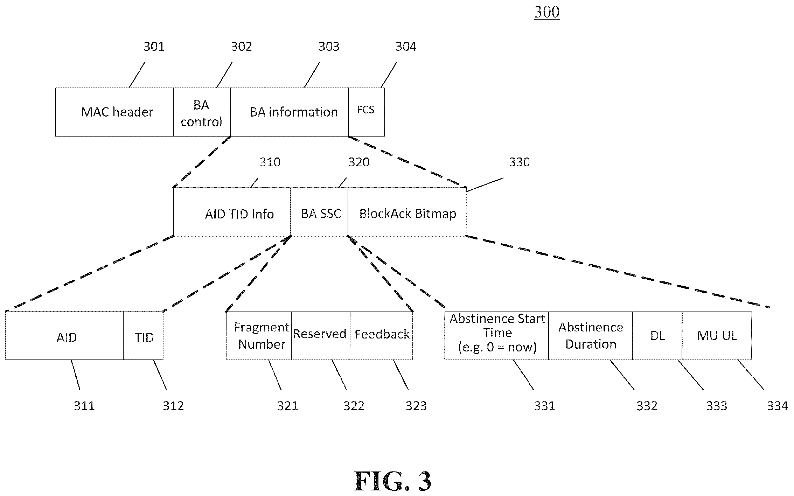

FIG. 3 shows an example of a frame format for a multi-STA BlockAck frame including an abstinence announcement, according to embodiments. As shown in FIG. 3, the Multi-STA BlockAck frame 300 may include a media access control (MAC) header field 301, a BlockAck control (illustrated as "BA control") field 302, a BlockAck information (illustrated as "BA information") field 303, and a frame check sequence (FCS) field 304. The BlockAck information field 303 may include AID and TID information field 310, a BA SSC field 320, and a BlockAck bitmap field 330. The AID and TID information field 310 may include an AID field 311 and a TID field 312. The BA SSC field 320 may include a fragment number field 321, a reserved field 322, and a feedback field 323. The BlockAck bitmap field 330 may include an abstinence start time field 331, an abstinence duration field 332, and abstinence type fields such as a DL abstinence type field 333 and a MU UL abstinence type field 334.

According to embodiments, an AP may transmit an abstinence announcement using the multi-STA BlockAck frame 300. For example, IEEE 802.11bn specifies that a transmitter of a multi-STA BlockAck frame may set the TID field to a special value that may indicate that other special values are set in the fragment number field and the feedback field, and further indicate that the BlockAck bitmap field is used to signal information that is not the normal block acknowledgement information.

According to embodiments, in the multi-STA BlockAck frame 300 illustrated in FIG. 3, the value of the TID field 312 may indicate that the multi-STA BlockAck frame 300 is being used to provide an abstinence announcement to the addressed STAs, and the fragment number field 321 and feedback field 323 may indicate a length and type of feedback provided. In addition, the fields included in the BlockAck bitmap field 330 may be used to provide information associated with the abstinence announcement. For example, the abstinence start time field 331 may indicate a start time of the abstinence period. In some embodiments, a value of zero ("0") in the abstinence start time field 331 may indicate that the abstinence period will begin as soon as the multi-STA BlockAck frame 300 is transmitted. The abstinence duration field 332 may indicate a duration of the abstinence period. The abstinence type fields may indicate a type of the abstinence period, which may refer to particular operations which the AP intends to abstain or refrain from performing.

For example, the DL abstinence type field 333 may indicate whether the AP intends to abstain or refrain from DL TXOPs, and the MU UL abstinence type field 334 may indicate whether the AP intends to abstain or refrain from MU-MIMO/OFDMA UL TXOPs. In some embodiments, each of the DL abstinence type field 333 and the MU UL abstinence type field 334 may be single-bit fields having a value of zero ("0") or a value of one ("1"). For example, a value of zero ("0") in the DL abstinence type field 333 may indicate that the AP intends to abstain or refrain from DL TXOPs, and a value of one ("1") in the DL abstinence type field 333 may indicate that the AP does not intend to abstain or refrain from DL TXOPs. As another example, a value of zero ("0") in the MU UL abstinence type field 334 may indicate that the AP intends to abstain or refrain from MU-MIMO/OFDMA UL TXOPs, and a value of one ("1") in the MU UL abstinence type field 334 may indicate that the AP does not intend to abstain or refrain from MU-MIMO/OFDMA UL TXOPs. However, these are only examples, and embodiments are not limited thereto.

Accordingly, the multi-STA BlockAck frame 300 of FIG. 3 may be used by an AP to provide an abstinence announcement that may indicate that, although the AP may be available for UL TXOPs and possibly DL TXOPs for some STAs, the AP does not intend to service the addressed at least one STA for at least one of DL TXOPs and MU-MIMO/OFDMA UL TXOPs during the abstinence period.

Although examples are described herein in which the abstinence announcement is signaled using a multi-STA BlockAck frame, embodiments are not limited thereto. For example, in some embodiments the abstinence announcement may be transmitted from the AP to at least one STA using a BSRP frame, or any other frame such as an ICF and an ICR frame. Various amendments of IEEE 802.11 may specify AID values that allow the information in the frame to be parsed by and apply to all receiving STAs, so in some embodiments the abstinence announcement may also be propagated in a broadcast manner.

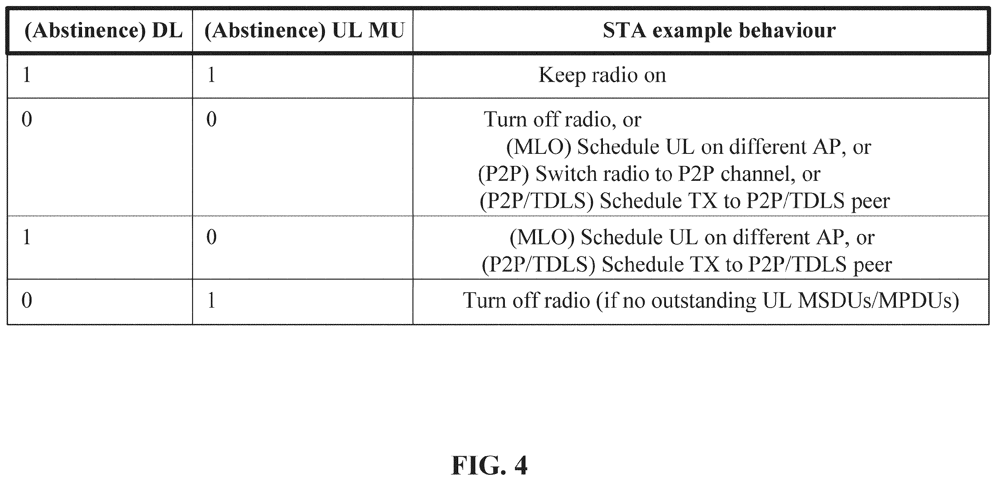

FIG. 4 is a table showing examples of behavior of a non-AP STA in response to receiving an abstinence announcement from an AP, according to embodiments. However, the behaviors listed in FIG. 4 are only examples, and embodiments are not limited thereto.

As an example, based on the DL abstinence type field 333 having a value of one ("1") and the MU UL abstinence type field 334 having a value of one ("1"), the STA may determine to keep its radio on (e.g., powered on, active, or activated) in order to be available for DL TXOPs and/or MU UL TXOPs during at least a portion of the abstinence period.

As an example, based on the DL abstinence type field 333 having a value of zero ("0") and the MU UL abstinence type field 334 having a value of zero ("0"), the STA may determine to turn off its radio (e.g., power off, power down, or deactivate its radio) during at least a portion of the abstinence period. However, embodiments are not limited thereto. For example, if multi-link operation (MLO) is enabled, the STA may determine to schedule UL operations with a different AP during at least a portion of the abstinence period. If P2P is enabled, the STA may determine to switch its radio to a P2P channel during at least a portion of the abstinence period. If P2P/TDLS is enabled, the STA may determine to schedule transmissions with a P2P/TDLS peer during at least a portion of the abstinence period.

As an example, based on the DL abstinence type field 333 having a value of one ("1") and the MU UL abstinence type field 334 having a value of zero ("0"), the STA may determine if at least one of MLO, P2P, and TDLS is enabled. If MLO is enabled, the STA may determine to schedule UL operations with a different AP during at least a portion of the abstinence period. If P2P/TDLS is enabled, the STA may determine to schedule transmissions with a P2P/TDLS peer during at least a portion of the abstinence period.

As an example, based on the DL abstinence type field 333 having a value of zero ("0") and the MU UL abstinence type field 334 having a value of one ("1"), the STA may determine to turn off its radio (e.g., power off, power down, or deactivate its radio) during at least a portion of the abstinence period, if the STA does not have any outstanding UL traffic to be processed.

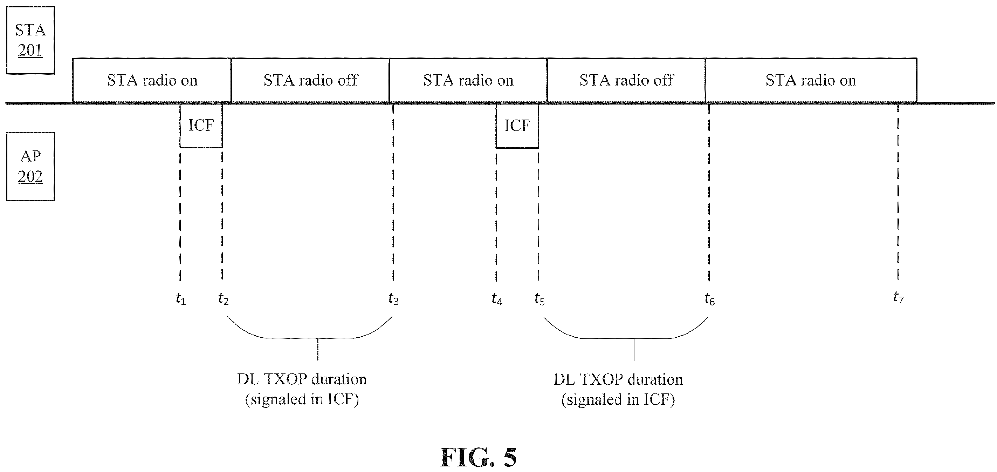

FIG. 5 illustrates an example of managing wireless communication, according to embodiments. In particular, FIG. 5 may illustrate an example in which an abstinence announcement is not used.

As shown in FIG. 5, at a time *t*₁, the AP 202 may transmit an ICF frame to the STA 201. The ICF frame may indicate that a DL TXOP is scheduled to occur from a time *t*₂ to a time *t*₃, and may further indicate that the STA 201 will not participate in the DL TXOP. Accordingly, the STA 201 may turn off its radio (e.g., deactivate the first transceiver 206) at the time *t*₂. However, because the ICF frame may not indicate what will occur after the time *t*₃, the STA 201 may turn its radio back on (e.g., reactivate the first transceiver 206) before the time *t*₃, so that the STA is available to receive additional signaling from the AP 202. Subsequently, at a time *t*₄, the AP 202 may transmit a new ICF frame to the STA 201. The new ICF frame may indicate that a DL TXOP is scheduled to occur from a time *t*₅ to a time *t*₆, and may further indicate that the STA 201 will not participate in the DL TXOP. Accordingly, the STA 201 may turn off its radio (e.g., deactivate the first transceiver 206) at the time *t*₅. However, because the ICF frame may not indicate what will occur after the time *t*₆, the STA 201 may turn its radio back on (e.g., reactivate the first transceiver 206) before the time *t*₆, so that the STA is available to receive additional signaling from the AP 202.

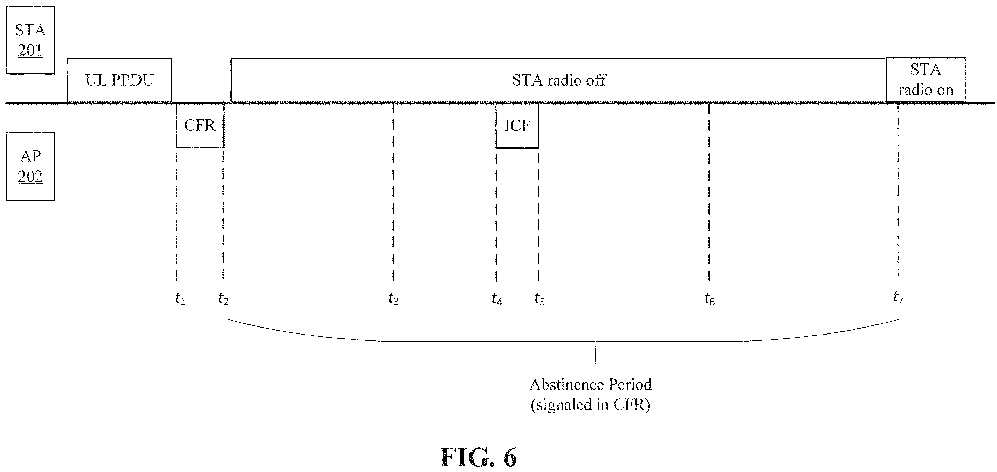

FIG. 6 illustrates an example of managing wireless communication using an abstinence announcement, according to embodiments. In particular, FIG. 6 may illustrate an example in which an abstinence announcement is used.

As shown in FIG. 6, before a time *t*₁, the STA 201 may transmit an UL PPDU to the AP 202. In response, at the time *t*₁, the AP 202 may transmit a CFR (control frame response) frame to the STA 201. According to embodiments, the CFR frame may include an abstinence announcement addressed to the STA 201. For example, the CFR frame may correspond to the multi-STA BlockAck frame 300 illustrated in FIG. 3. The abstinence announcement may indicate that the AP 202 intends to refrain from initiating a TXOP with the non-AP STA during an abstinence period that begins at the time *t*₂ and ends at a time *t*₇. Based on the abstinence announcement, the STA 201 may determine to turn off its radio (e.g., deactivate the first transceiver 206) at the time *t*₂. In addition, because the information included in the abstinence announcement may provide more information about the intentions of the AP 202 than the ICF frames discussed above with reference to FIG. 5, the STA 201 may be able to determine to not reactivate its radio until the end of the abstinence period.

Therefore, the STA 201 may keep its radio off through the time *t*₃, the time *t*₄, the time *t*₅, and the time *t*₆, and may turn its radio back on (e.g., reactivate the first transceiver 206) before the time *t*₇. Therefore, as shown in FIGS. 5 and 6, the abstinence announcement may allow the STA 201 to conserve additional power by keeping its radio off for a longer amount of time.

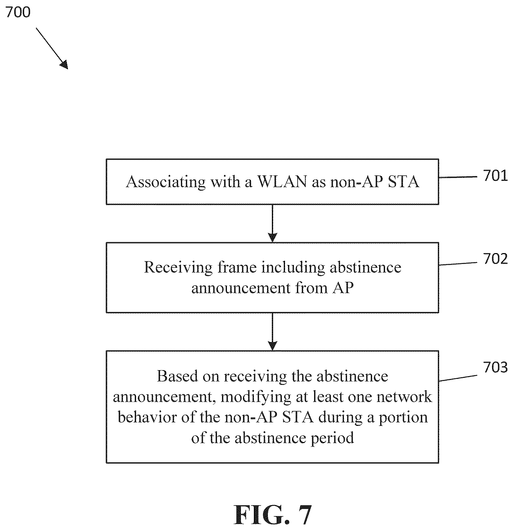

FIG. 7 is a flow chart of process 700 for managing wireless communication using an abstinence announcement. In some implementations, one or more process blocks of FIG. 7 may be performed by one or more of the elements discussed above, for example the STA 201 and the elements included therein.

As shown in FIG. 7, at operation 701, the process 700 may include associating with a WLAN as a non-AP station STA. In embodiments, the non-AP STA may correspond to the STA 201 discussed above.

As further shown in FIG. 7, at operation 702 the process 700 may further include receiving, from an AP included in the WLAN, a frame comprising an abstinence announcement indicating that the AP intends to refrain from initiating a TXOP with the non-AP STA during an abstinence period. In embodiments, the AP may correspond to the AP 202 discussed above.

As further shown in FIG. 7, at operation 703 the process 700 may further include, based on receiving the abstinence announcement, modifying at least one network behavior of the non-AP STA during a portion of the abstinence period.

In embodiments, the abstinence announcement may indicate that the AP intends to refrain from at least one of initiating a downlink (DL) TXOP with the non-AP STA during the abstinence period; and transmitting, to the non-AP STA, a trigger frame initiating an uplink (UL) TXOP according to at least one of multi-user (MU) multi-input multi-output (MIMO) and orthogonal frequency division multiple access (OFDMA) during the abstinence period.

In embodiments, the abstinence announcement may indicate that the AP intends to refrain from initiating a TXOP with a plurality of STAs comprising the non-AP STA during the abstinence period, and the AP may initiate a TXOP with at least one other STA during the abstinence period.

In embodiments, the modifying of the network behavior may include deactivating a transceiver included in the electronic device during the portion of the abstinence period.

In embodiments, the modifying of the network behavior may include at least one of: modifying a priority of at least one of a local event and a local operation which are scheduled to occur during the portion of the abstinence period; modifying a timing of the at least one of the local event and the local operation; and repurposing at least one resource associated with the electronic device during the portion of the abstinence period. In some embodiments, the local event may be, for example, a local in-device coexistence(IDC) event.

In embodiments, the modifying of the network behavior may include evaluating a QoS associated with the non-AP STA, and based on determining that the QoS is less than a threshold QoS, performing at least one of: transmitting, to the AP, an action frame requesting improved service; disabling a link between the non-AP STA and the AP; and changing a link mapping for at least one of DL and UL using traffic identifier (TID)-to-link mapping.

In embodiments, the frame may include a multi-STA BlockAck frame received from the AP. In embodiments, the multi-STA BlockAck frame may correspond to the multi-STA BlockAck frame 300 discussed above.

In embodiments, the abstinence announcement may be indicated in at least one from among a TID value and a BlockAck bitmap included in the multi-STA BlockAck frame. In embodiments, the TID value may be included in the TID field 312 discussed above, and the BlockAck bitmap may correspond to the BlockAck bitmap field 330 discussed above.

In embodiments, the process 700 may further include initiating, by the non-AP STA, an EDCA UL TXOP with the AP during the abstinence period.

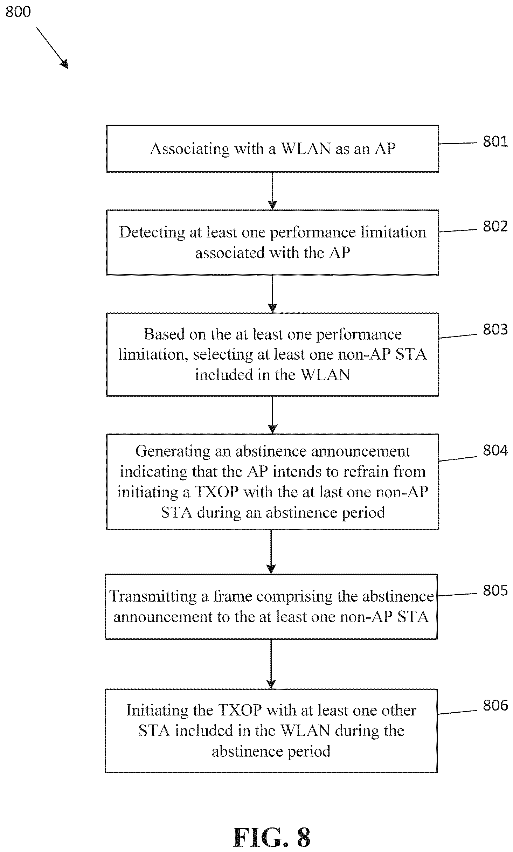

FIG. 8 is a flow chart of process 800 for managing wireless communication using an abstinence announcement. In some implementations, one or more process blocks of FIG. 8 may be performed by one or more of the elements discussed above, for example the AP 202 and the elements included therein.

As shown in FIG. 8, at operation 801, the process 800 may include associating with a WLAN as an AP. In embodiments, the AP may correspond to the AP 202 discussed above.

As further shown in FIG. 8, at operation 802 the process 800 may further include detecting at least one performance limitation associated with the AP (e.g., with an electronic device used to implement the AP).

As further shown in FIG. 8, at operation 803 the process 800 may further include, based on the at least one performance limitation, selecting at least one non-AP STA included in the WLAN. In embodiments, the at least one non-AP STA may include the STA 201 discussed above.

As further shown in FIG. 8, at operation 804 the process 800 may further include generating an abstinence announcement indicating that the AP intends to refrain from initiating a TXOP with the at least one non-AP STA during an abstinence period.

As further shown in FIG. 8, at operation 805 the process 800 may further include transmitting a frame comprising the abstinence announcement to the at least one non-AP STA. In embodiments, the frame may correspond to the multi-STA BlockAck frame 300 discussed above.

As further shown in FIG. 8, at operation 806 the process 800 may further include, initiating the TXOP with at least one other STA included in the WLAN during the abstinence period.

In embodiments, the at least one performance limitation may include at least one from among a low-power state associated with the AP (e.g., associated with an electronic device used to implement the AP); at least one of an access limitation and a latency associated with a memory corresponding to the AP (e.g., a memory included in an electronic device used to implement the AP); and a traffic backlog associated with the AP and the at least one non-AP STA.

Although FIGS. 7 and 8 show example blocks of processes 700 and 800, in some implementations, processes 700 and 800 may include additional blocks, fewer blocks, different blocks, or differently arranged blocks than those depicted in FIGS. 7 and 8 . Additionally, or alternatively, two or more of the blocks of processes 700 and 800 may be performed in parallel.

Accordingly, embodiments may allow an AP to announce that it intends to refrain or abstain from initiating a TXOP (e.g., at least one of a DL TXOP and an OFDMA/MU-MIMO UL TXOP) to one or more STAs during an abstinence period. The one or more STAs may continue initiating EDCA UL TXOPs during this abstinence period. If the STAs do not have any UL, or do not wish to use EDCA UL TXOP, the one or more STAs may conserve power by turning off their radios without any additional frame exchanges or additional overheads. Embodiments may relate to an extension or enhancement of a unicast unavailability announcement, to allow an AP to announce TXOP initiator unavailability. Embodiments may enable the STA to conserve power, or take countermeasures if such the unavailability of the AP is not acceptable and/or desirable (e.g., for QoS purposes). Embodiments may allow improved power consumption for the STA, and may also allow the STA to take countermeasures based on the information about intentional (but potentially avoidable in the future) DL or/and UL delays caused by the AP.

The disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. A singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., via wires), wirelessly, or via a third element.

As used in connection with the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

One or more embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to one or more embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to one or more embodiments, each component (e.g., a module or a program) of the above-described components may include a single entity or multiple entities. According to one or more embodiments, one or more of the above-described components may be omitted, or one or more other components may be added. Alternatively or additionally, a plurality of components (e.g., modules or programs) may be integrated into a single component. In such a case, according to one or more embodiments, the integrated component may still perform one or more functions of each of the plurality of components in the same or similar manner as they are performed by a corresponding one of the plurality of components before the integration. According to one or more embodiments, operations performed by the module, the program, or another component may be carried out sequentially, in parallel, repeatedly, or heuristically, or one or more of the operations may be executed in a different order or omitted, or one or more other operations may be added.

According to one or more embodiments, in a non-volatile storage medium storing instructions, the instructions may be configured to, when executed by at least one processor, cause the at least one processor to perform at least one operation. The at least one operation may include displaying an application screen of a running application on a display, identifying a data input field included in the application screen, identifying a data type corresponding to the data input field, displaying at least one external electronic device, around the electronic device, capable of providing data corresponding to the identified data type, receiving data corresponding to the identified data type from an external electronic device selected from among the at least one external electronic device through a communication module, and entering the received data into the data input field.

## Claims

1. An electronic device (201) comprising:
a transceiver (206);
at least one processor (208); and
a memory (210) configured to store at least one instruction which, when executed by the at least one processor (208), causes the electronic device (201) to:
associate (701) with a wireless local area network, WLAN, as a non-access point, AP, station, STA (101-1, 101-2, 101-3, 101-4);
receive (702), from an AP (102-1, 102-2) included in the WLAN, a frame comprising an abstinence announcement indicating that the AP (102-1, 102-2) intends to refrain from initiating a transmission opportunity, TXOP, with the non-AP STA during an abstinence period; and
based on receiving the abstinence announcement, modify (703) at least one network behavior of the non-AP STA (101-1, 101-2, 101-3, 101-4) during a portion of the abstinence period.

2. The electronic device (201) of claim 1, wherein the abstinence announcement indicates that the AP (102-1, 102-2) intends to refrain from at least one of:
initiating a downlink, DL, TXOP with the non-AP STA (101-1, 101-2, 101-3, 101-4) during the abstinence period; and
transmitting, to the non-AP STA (101-1, 101-2, 101-3, 101-4), a trigger frame initiating an uplink, UL, TXOP according to at least one of multi-user, MU, multi-input multi-output, MIMO, and orthogonal frequency division multiple access, OFDMA, during the abstinence period.

3. The electronic device (201) of claim 1 or 2, wherein the abstinence announcement indicates that the AP (102-1, 102-2) intends to refrain from initiating a TXOP with a plurality of STAs (101-1, 101-2, 101-3, 101-4) comprising the non-AP STA (101-1, 101-2, 101-3, 101-4) during the abstinence period, and
wherein the AP (102-1, 102-2) initiates the TXOP with at least one other STA (101-1, 101-2, 101-3, 101-4) during the abstinence period.

4. The electronic device (201) of any one of claims 1 to 3, wherein, to modify the at least one network behavior, the at least one instruction, when executed by the at least one processor (208), further causes the electronic device (201) to:
deactivate the transceiver (206) during the portion of the abstinence period.

5. The electronic device (201) of any one of claims 1 to 4, wherein, to modify the at least one network behavior, the at least one instruction, when executed by the at least one processor (208), further causes the electronic device (201) to perform at least one of:
modifying a priority of at least one of a local in-device coexistence event and a local operation which are scheduled to occur during the portion of the abstinence period;
modifying a timing of the at least one of the local in-device coexistence event and the local operation; and
repurposing at least one resource associated with the electronic device (201) during the portion of the abstinence period.

6. The electronic device (201) of any one of claims 1 to 5, wherein, to modify the at least one network behavior, the at least one instruction, when executed by the at least one processor (208), further causes the electronic device (201) to evaluate a quality-of-service, QoS, associated with the non-AP STA (101-1, 101-2, 101-3, 101-4), and based on determining that the QoS is less than a threshold QoS, perform at least one of:
transmitting, to the AP (102-1, 102-2), an action frame requesting improved service;
disabling a link between the non-AP STA (101-1, 101-2, 101-3, 101-4) and the AP (102-1, 102-2);
changing a link mapping for at least one of DL and UL using traffic identifier, TID,-to-link mapping; and
subscribing to an available restricted target wake time, R-TWT, session.

7. The electronic device (201) of any one of claims 1 to 6, wherein the frame includes a multi-STA block acknowledgement, BlockAck, frame (300) received from the AP (102-1, 102-2).

8. The electronic device (201) of claim 7, wherein the abstinence announcement is indicated in at least one from among a traffic identifier, TID field (312), and a BlockAck bitmap field (330) included in the multi-STA BlockAck frame (300).

9. The electronic device (201) of any one of claims 1 to 8, wherein the at least one instruction, when executed by the at least one processor (208), further causes the electronic device (201) to:
initiate, by the non-AP STA (101-1, 101-2, 101-3, 101-4), an enhanced distributed channel access, EDCA, UL TXOP with the AP (102-1, 102-2) during the abstinence period.

10. A method of managing wireless communication, the method being performed by at least one processor (208) included in an electronic device (201), and comprising:
associating (701) with a wireless local area network, WLAN, as a non-access point, AP (102-1, 102-2), station, STA;
receiving (702), from an AP (102-1, 102-2) included in the WLAN, a frame comprising an abstinence announcement indicating that the AP (102-1, 102-2) intends to refrain from initiating a transmission opportunity, TXOP, with the non-AP STA (101-1, 101-2, 101-3, 101-4) during an abstinence period; and
based on receiving the abstinence announcement, modifying (703) at least one network behavior of the non-AP STA (101-1, 101-2, 101-3, 101-4) during a portion of the abstinence period.

11. The method of claim 10, wherein the modifying of the at least one network behavior comprises evaluating a quality-of-service, QoS, associated with the non-AP STA (101-1, 101-2, 101-3, 101-4), and based on determining that the QoS is less than a threshold QoS, performing at least one of:
transmitting, to the AP (102-1, 102-2), an action frame requesting improved service;
disabling a link between the non-AP STA (101-1, 101-2, 101-3, 101-4) and the AP (102-1, 102-2);
changing a link mapping for at least one of DL and UL using traffic identifier, TID,-to-link mapping; and
subscribing to an available restricted target wake time, R-TWT, session.

12. The method of claim 10 or 11, wherein the modifying of the at least one network behavior comprises deactivating a transceiver (206) included in the electronic device (201) during the portion of the abstinence period.

13. The method of any one of claims 10 to 12, wherein the modifying of the at least one network behavior comprises at least one of:
modifying a priority of at least one of a local in-device coexistence event and a local operation which are scheduled to occur during the portion of the abstinence period;
modifying a timing of the at least one of the local in-device coexistence event and the local operation; and
repurposing at least one resource associated with the electronic device (201) during the portion of the abstinence period.

14. The method of any one of claims 10 to 13, wherein the modifying of the at least one network behavior comprises evaluating a quality-of-service, QoS, associated with the non-AP STA (101-1, 101-2, 101-3, 101-4), and based on determining that the QoS is less than a threshold QoS, performing at least one of:
transmitting, to the AP (102-1, 102-2), an action frame requesting improved service;
disabling a link between the non-AP STA (101-1, 101-2, 101-3, 101-4) and the AP (102-1, 102-2);
changing a link mapping for at least one of DL and UL using traffic identifier, TID,-to-link mapping; and
subscribing to an available restricted target wake time, R-TWT, session.

15. The method of any one of claims 10 to 14, wherein the frame includes a multi-STA block acknowledgement, BlockAck, frame (300) received from the AP (102-1, 102-2).
